Europäisches Patentamt

European Patent Office

Office européen des brevets

(11) Publication number: **0 222 443**
**A2**

# (12) EUROPEAN PATENT APPLICATION

(21) Application number: **86201901.5**

(22) Date of filing: **31.10.86**

(51) Int. Cl.⁴: **G06F 9/46**

(30) Priority: **04.11.85 US 794863**

(43) Date of publication of application:
**20.05.87 Bulletin 87/21**

(84) Designated Contracting States:
**DE FR GB**

(71) Applicant: **N.V. Philips' Gloeilampenfabrieken**
**Groenewoudseweg 1**
**NL-5621 BA Eindhoven(NL)**

(72) Inventor: **Den Boef, Johannes Hendrik**
**INT. OCTROOIBUREAU B.V. Prof. Holstlaan 6**
**NL-5656 AA Eindhoven(NL)**

(74) Representative: **Strijland, Wilfred et al**
**INTERNATIONAAL OCTROOIBUREAU B.V.**
**Prof. Holstlaan 6**
**NL-5656 AA Eindhoven(NL)**

(54) **Multiprocess computer and method for operating same.**

(57) A multiprocess computer executes operating system routines and user processes. One specific peripheral apparatus has a preferential status in that it may emit attention interrupts and/or completion interrupts that relates to an I/O-operation. Only those interrupts find preferential treatment in that the associated interrupt has a higher priority level than the one(s) corresponding to the majority of the operating system routines. In contradistinction to all other user process interrupts the above attention and completion interrupts are executed in their own hardware and software context, to which effect the latter context is temporarily activated, and after execution of the interrupt procedure restored to its previous status. In this way dialog with the peripheral may be executed real-time, while the "own" context greatly facilitates programming. An upgraded driver program is also presented.

FIG. 4

## Multiprocess computer and method for operating same.

### BACKGROUND TO THE INVENTION:

The invention relates to a multiprocess computer and a method for operating same. Such processes are divided into operating system routines which are controlled by respective application programs or modules thereof and user processes that are executed with respect to executing a user-required function. A typical non-limiting example, for which the invention was conceived and reduced to practice, is the VAX-11-750 Computer by Digital Equipment Corporation, Maynard, Massachusetts, USA. Many aspects of the operating system or so-called executive thereof are described in the book "VAX/VMS Internals and Data Structures", by L.J. Kenah and S.F. Bate, published by Digital Press, Bedford Massachusetts USA 1984.

### ASPECTS OF THE STATE OF THE ART:

In the VAX, and also in many other computers, as the use of the present invention is not at all limited to the VAX-system, the scheduling of process execution is done by the scheduler according to either of two principles:

a. the interrupt, which means that any process or routine which needs execution can interrupt any other process or routine being executed if the former process has a higher priority level than the latter. The priority level may be specified by hardware in that the interrupts arrive via specifically assigned leads, or in that the priorities are determined upon interrogation thereof by the operating system;

b. the normal scheduling, wherein a process or routine which no longer needs execution, relinquishes the use of the processor whereupon the processor determines which process or routine must now be activated. The latter process or routine may either be one for which an interrupt of too low priority level had been earlier given with respect to the interruptibility of the currently executed process or routine. Alternatively, the next process or routine is taken up from a waiting list on initiative of the processor, in that the latter inspects whether such taking up is useful. If it is not, the processor takes up the next process or routine according to some predetermined order of priority. If the waiting list is empty, a so-called "null process" is activated.

Now, operating system routines usually are provided with an interrupt feature. The highest interrupt priority level is the "power-down-signalization". Lower interrupt priority levels relate to I/O-handling. Operating system routines are executed in system context. User processes usually are not provided with an interrupt feature, so that they are only executed if the system software does not need activation.

### ONE SPECIFIC SOLUTION OF THE PRIOR ART:

It has been found that certain user processes need instant attention and could not wait until execution of all system software or other user processes of higher priority would be ready. The process is scheduled by the system software and is the basic entity of the sequence of states assumed by the computer: it contains the address space and hardware and software context currently relevant. The process therewith comprises: a program, privileges, and other boundary conditions, if relevant; and also an address translation table and a dump space, indicating where results and data generated must be intermediately dumped if necessary. The solution in VAX is the following, see, e.g. the cited book, page 115 ff. ("Connect to interrupt mechanism") One application program module may be assigned a higher priority level in that it is allowed the interrupt feature at a higher level than the one-(s) associated to the normal scheduling. The effect is that a physical memory section associated to said one program module, containing data and/or code, is put in the virtual address space of the system software. This renders said module executable. This has the following drawbacks:

a. The context, i.e. the contents of specific hardware registers, etcetera, remains unaltered upon the activation of this particular user program module. This severely limits the flexibility of the execution in that the knowledge on the point where the execution had been terminated during the most recent activation of the module is not present in the locations normally reserved therefor. In transferring from one program module to another program module, such hardware registers are conveniently used to exchange information with stacks and other dedicated provisions.

b. In execution of the activated program module, the content of the remainder of the virtual address space of the processor remains unaltered, and incompatible to the program module in question. For example, segment-table and other address-tables do not have their content updated.

Therefore, the code may not refer to information outside the physical memory section referred to above. Again, this frequently hampers flexibility in programming to a great extent.

## SUMMARY OF THE INVENTION:

The present invention mitigates the disadvantages of the earlier solution in that for a specific peripheral, and for predetermined interrupt signals associated thereto an instantly activatable high priority level is assigned. This means that the related activity can really interrupt many kinds of operating system routines having a lower interrupt priority level. In this way a dialog with this peripheral may be executed at real-time, wherein also the optimum context to the process in question is present and accessible. One specific example is a magnetic resonance imaging apparatus for medical diagnostic use for which a delay of an attention or completion interrupt would necessitate certain measurements on patients to be repeated which could cause distress, loss of apparatus time and/or increased cost.

The above must be discriminated from a different known strategy, i.e., the self-controlled raise of the priority level of a user process after the latter had been activated. This yields the process in question nearly uninterruptible which is useful in executing complicated tasks involving critical intermediate results or states. However this would not improve the real-time character of the beginning of the activity of the process. It is a specific object of the invention to enhance this real-time character.

## BRIEF DESCRIPTION OF THE DRAWINGS:

The invention is further explained with respect to the following Figures and tables.

Figure 1 is a block diagram of a computer for use with the invention;

Figure 2 explains the respective priority levels in the exemplary computer;

Figure 3 is a block diagram of a driver execution sequence;

Figure 4 is a modified flow chart relating to an attention interrupt servicing by the driver;

Figure 5 is a modified flow chart relating to a completion interrupt servicing by the driver;

Figure 6 shows the software blocks as components of the driver program.

Furthermore, a complete driver program printout for said medical magnetic resonance imaging apparatus is appended.

## THE ENVIRONMENT OF THE INVENTION:

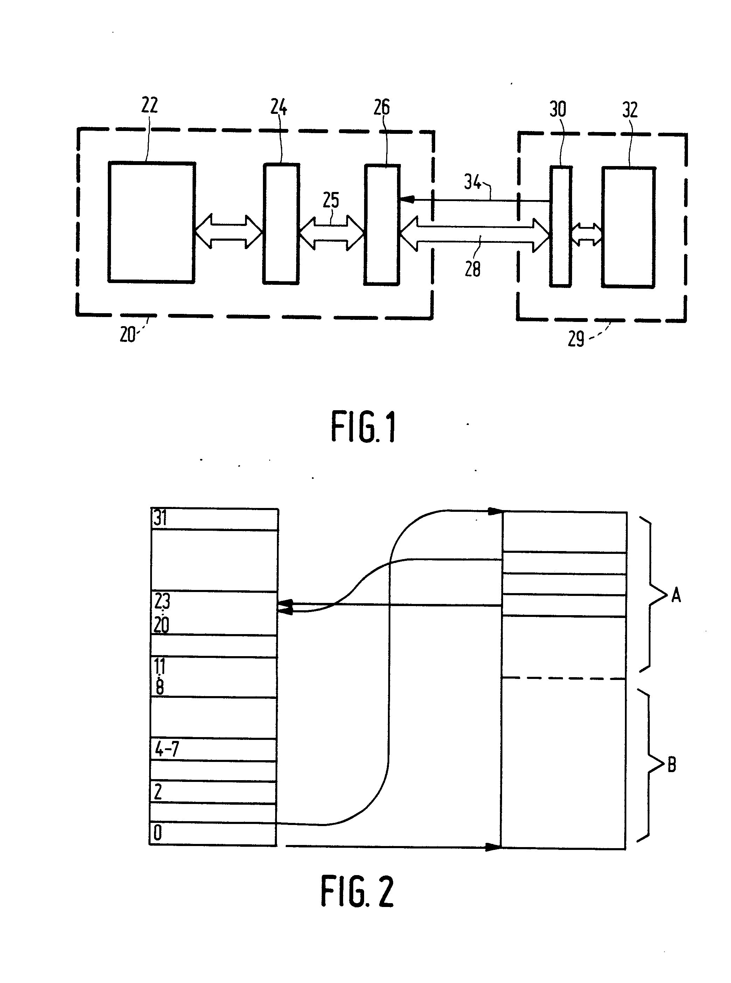

Figure 1 is a block diagram of a computer for use with the invention, for example, a VAX-11-750-Computer, provided with a VAX/VMS operating system of release 3.7. The central computer 20 is provided with a UNIBUS-adaptor 24, a UNIBUS-interface 26, and further elements such as processor and main store, generally shown as block 22. The UNIBUS-proper is indicated by label 25; the bus can support a plurality of interfaces 26, each interface for an associated peripheral device. Peripheral device 29 is also provided with an interface 30 to element 26 and further elements 32, such as the peripheral function proper (I/O-function, control card). The computer-to-peripheral device connection 28 has a physical multiplicity and may have an appreciable length in that the peripheral device is situated at a remote location. Connection 28 is accompanied by an attention line 34 on which the peripheral device may signal that it needs attention from the central computer, e.g., in that it must transmit or receive data, or that a specific control must be executed. Interface element 26 receives the attention requesting signal and translates this to an attention interrupt to be forwarded to the processor. In certain cases a so-called "completion interrupt" may be generated by interface element 26. One applicable example is that a certain amount of data is being sent to peripheral device 28, while at the end of this transmission operation the processor must execute a certain function. Thereto interface element 26 monitors the transport and at the end thereof independently generates this completion interrupt.

## DESCRIPTION OF THE VARIOUS SCHEDULING PRIORITY LEVELS:

Figure 2 explains the respective priority levels in an exemplary computer, to wit, the VAX-11-750-machines etcetera. The left hand block enumerates several of the maximum of thirty-two interrupt priority levels. Level 31 is the highest level and is activated by the an electric power failure resulting in the execution of the power-down routine: upon activation several key informations are saved into non-volatile storage elements for allowing a controlled restart when power returns. Levels 20-23 are assigned to respective I/O-operations on the UNIBUS, which must be served fast, for example to avoid an "idle" state in a high volume printer or to accommodate reception of a block of data from a magnetic disk. Such operations may be, for example start/stop operations controlled by a direct-memory-access (DMA) activity. The use of four sublevels allows one to give certain peripherals an interrupting power over other peripherals. Levels 8-11 are assigned to the necessary pre-processing and post-processing for such I/O-operations. An example of pre-processing is the calculation of a physical memory address where the next I/O-operation is to begin. An example of post-processing is the ascertaining of acknowledge signals to verify whether an output operation had been executed correctly. If such verification is deemed unnecessary, the post-processing in question may be omitted. Each level is assigned to a particular peripheral or group of peripherals so that the input/output processes also in this respect have interrupting power among themselves. In certain cases in principle levels 8-11 and 20-23 may be combined to a single group of levels, or even to a single level. If two processes have the same interrupt priority level they cannot interrupt each other in either of the two directions.

Levels 4-7 are assigned to the processes of the context switching to accommodate the context, e.g. hardware register contents to a newly activated process. The associated interrupt may be activated, e.g. by the clock if non-real-time processes are awoken and put to sleep, respectively, at the beginning and end of their assigned time slices. In the case of a real-time process requiring an I/O-operation, the real-time process in question initates the associated interrupt. The specific meaning of real-time in prior VAX-usage is explained elsewhere.

Level 2 is assigned to specific user program-originated program modules; the normal level for user programs is level zero, which of course means that their facility to interrupt is only notional because there is no lower level where a potential victim program could have operated.

The user software generally operates without interrupt facilities (while, of course, itself is interruptable by all levels of 1 and up). Besides the levels of interrupt priority as shown, others may be implemented or left unoccupied by intent.

The right hand side of Figure 1 explains the two normal levels of user program execution. The software modules in region A are called "real-time". In fact, they are interruptable by all higher interrupt levels; however, they have a specific feature, in that execution proceeds (when uninterrupted) as long as processing is usefull. In contradistinction, processes in region B are only assigned time slices of predetermined length and upon attaining the end of the time slice, execution is terminated anyway.

A specific feature of the VAX-operating system is that one user program in either category A or B may be quasi-real-time, in that it is assigned a higher interrupt level. However, this involves no context switching and this generally narrows the scope of possible activities or complicates the programming in that the necessary context must be present in the software itself. The invention alleviates the problems, by modifying the software, in particular the driver program of the peripheral device in question. The specifics of this modification will be described hereinafter. The allocating of a raised priority level to the user process in question has been indicated by an arrow from the user process (drawn by hatching) to interrupt priority levels 20..23 in the left hand block. As shown in Figure 2, two or more different user processes may have assigned a high priority level. The resulting level need not be in the same region, while in principle also a user process of region B could have such assignation. If required, all these latter user processes could have the context switching.

DESCRIPTION OF A PREFERRED EMBODIMENT:

Now, the invention may be based on exclusively software measures. In any way, this results in a physical limitation to the functioning of the computer, in that a certain peripheral may now be really real-time driven, and therefore could function more adequately. In certain critical situations, proper functioning without the practising of the present invention, i.e. according to earlier practice would be impossible, or would anyway required intricate programming in machine language (macro). According to the present invention the interrupt service routine may be written in a so-called high-level language. One of the few requirements would be that all code and data that could be used in executing this interrupt service routine were present in main store, because the improved software would care for all virtual addressing. However, if the driver were to start the interrupt service routine with part of these code/data in background store, (e.g. magnetic disc) then the system would go into a "crashed" state.

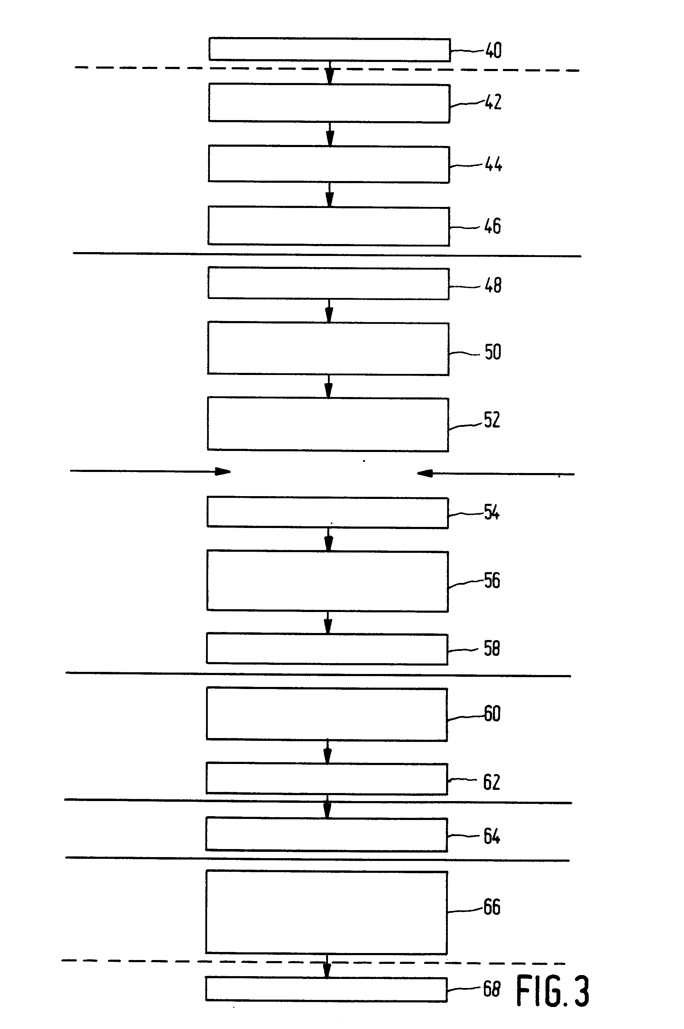

Figure 3 for reasons of recapitulation gives a block diagram of a driver execution sequence. The driver is the control program in the central computer for the peripheral device in question. Express reference is had the series "VAX/VMS Software", in particular Volume 9 of the 3.0 release, produced by DEC. The changes to release 3.7 have been included in the present disclosure if and when relevant. Page 1.3 of the chapter "Guide to writing a device driver" lists substantially all important call categories to driver routines:
I/O-operation set-up;
Controller initialization;
Device unit initialization;

Start I/O-operation;
Service device interrupt;
Cancel I/O-operation;
Log device errors.

The present invention deals substantially with the fifth of the categories. At left in Figure 3 a listing is shown of the actual context in which the processor executes, and of the actual stack, i.e. main store area which can be used for temporary dumping a program counter position of an incomplete process for allowing later return. The listing starts when in block 40 the user process issues an I/O-request (DOL QIO). Blocks 42-46 are the first steps of the I/O-servicing where the preprocessing takes place, still in the user process context. Blocks 48-52 complete the initial operations before starting the actual I/O-operation. Blocks 54-62 are the realm of the driver wherein the invention would produce enhancement. Notably, blocks 54, 56, 58 refer to the beginning of an interrupt operation. Blocks 60, 62 refer to the terminating of an I/O-operation. The combination of interrupt context and fork process context is together system-determined context, not user process context. Therefore, as seen from the left hand column, never will the user process context appear in the way prior art would handle this interrupt. The latter only reappears in blocks 66, 68, but this is only after the initial interrupt operations had been executed. Finally in blocks 68 an asynchronous trap routine is executed at the low user level.

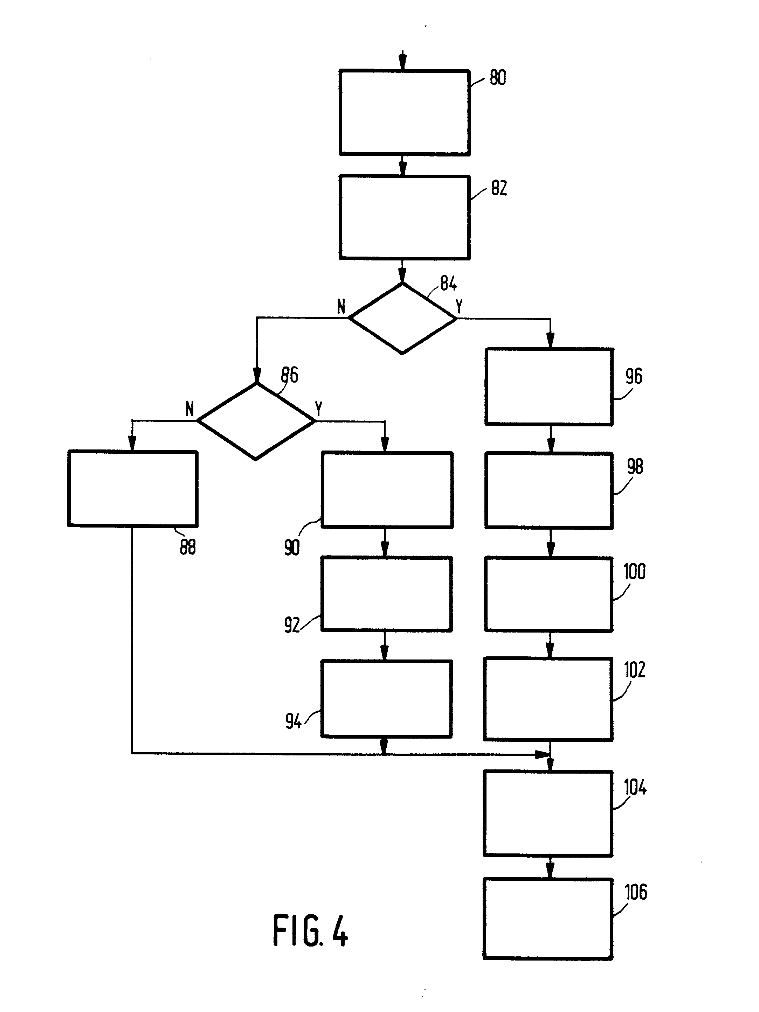

Figure 4 is a modified flow chart according to the invention relating to an attention interrupt handling. In fact, it is an extension to page 11, 2 of the cited "Guide to writing a device driver" chapter, and would represent a modification of blocks 54-62 in Figure 4. In fact blocks 80-84, 96-106 are replicates from this page 11.2. The flow chart is entered in block 80 via an interrupt. However, if the incoming interrupt has a priority level which is not higher than the level of the operation presently being executed, this interrupt is ignored and put on a waiting list for later processing. Furthermore, if the interrupt had emanated from an operating system routine, it is directly processed in the system context without entering this flow chart. In fact this flow chart is called "writing interrupt service routines" by DEC, which means that the system software is not influenced by such writing. In fact, the present invention imports a few changes into the system software, contrary to common usage of application software engineers who treat the system software as a kind of "block box".

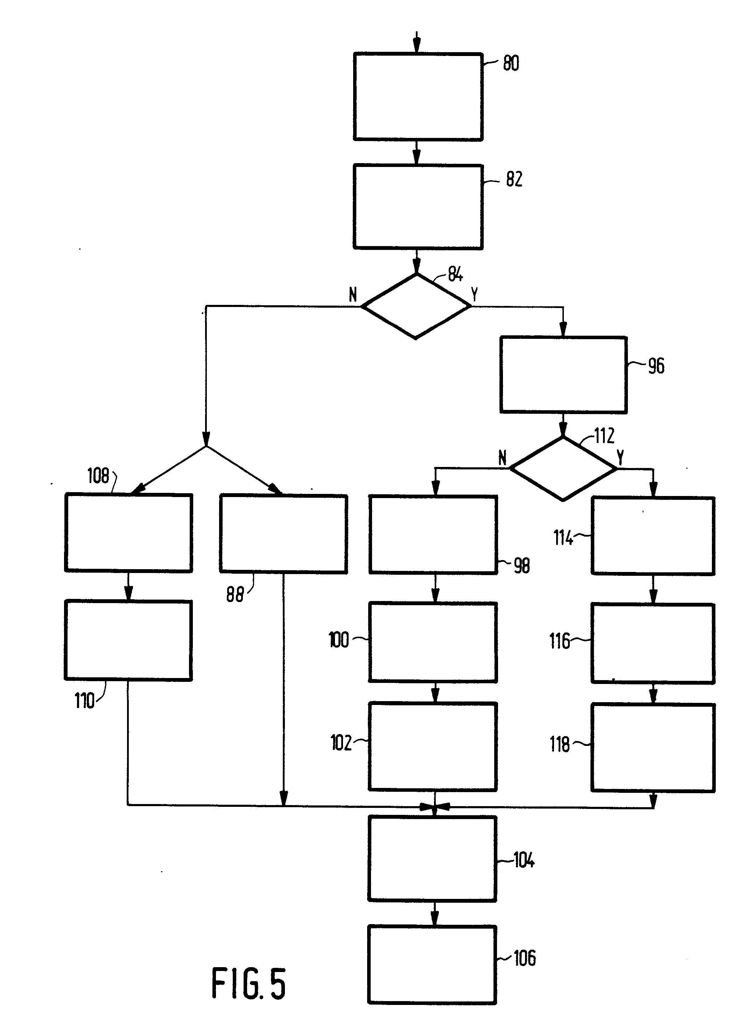

In block 84 it is detected whether the interrupt was solicited by the system. If the interrupt is non-solicited and therefore autonomous, it is detected in block 86 whether it is a "device attention interrupt". This may be detected by specific data accompanying the interrupt proper, e.g. one or more signalling bits. The "attention" interrupt would in principle require immediate service. If it is not an attention interrupt, in block 88 the interrupt is rejected as spurious. However, if it is an attention interrupt, first in block 90 the context is switched to the one of the user process in question. Next, in block 92 the process attention interrupt procedure is executed. Finally in block 94 the context is switched back to the original one, and the system reverts to block 104 according to the known driver structure. (The latter also happens after block 88 has been traversed.) The prior art situation with respect to the left had part of Figure 4 is, for reasons of comparison, shown in the left had part of Figure 5. In writing an interrupt service there are two possible choices here: one is the block 88 as in Figure 4, but without the detection of block 86. The other choice is shown by blocks 108, 110: here an appropriate action is taken. However, during execution of this action, no context switching is undertaken with no changes in the virtual addressing organization.

Figure 5 is a modified flow chart relating to a completion interrupt handling. Blocks corresponding to Figure 4 have corresponding numbers. Thus, blocks 80-84, 96-106 need no further consideration. Figure 5 does not have the provisions for an attention interrupt as discussed with respect to Figure 4. Thus, blocks 88, 108, 110 represent the state of the art with respect to handling such attention interrupt. In block 84 it is detected whether the interrupt was solicited, that is, whether the processor, as a result of some earlier outcome, had concluded that at some future instant this particular interrupt was to follow. In the positive case, after reactivation of the suspended driver (block 96) it is determined, whether the I/O-operation, being executed up till then, was provided with the real-time feature discussed earlier. If no, the normal sequence of blocks 98-102 ensues. If yes, blocks 114, 116, 118 are executed. These correspond closely to blocks 90, 92, 94, respectively, of Figure 4, apart from block 92 wherein the process completion interrupt procedure is executed. Finally, all branches of the flow chart reunite into block 104.

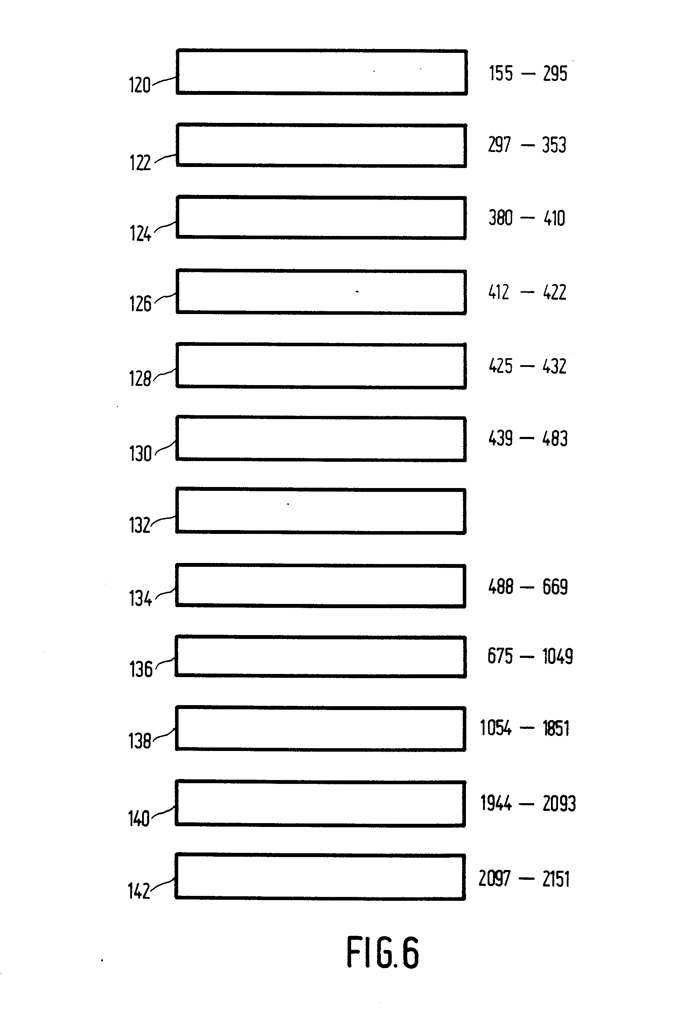

Figure 6 shows the software blocks as components of the driver program. Specific reference is had to the chapter "Template for an I/O-driver" of the cited manual, pages 6.5-6.8. Each block is provided with an identifier stating the essential functions of the block. The right hand column refers to the line numbers of the driver print-out annexed hereto. In block 120 UCB means "Unit Control block". In block 124 the location of the code or information for the operating system is indicated. Specifically, the context switch is executed under control of block 138. It should be noted that this picture is not a flow chart.

Finally, hereinafter, a print-out of a preferred driver embodiment is given. With respect to the specific embodiment given only the modification of Figure 4 has been given therein. Specifically, block 90 of Figure 4 has been implemented in lines 1741 through 1808 and lines 1848 through 1851. Block 94 of Figure 4 has been implemented by lines 1812 through 1851 (the lines 1848-1851 being common to blocks 90, 94). In the embodiment only provision was made for one peripheral device.

## Claims

1. A method for operating a multiprocess computer for sequentially activating respective operating system routines and user processes, said user processes including at least one specific user process pertaining to a preferentially treatable peripheral device, said method comprising the step of:
a. loading the driver program of said preferentially treatable peripheral device, said driver program specifying a predetermined attention interrupt by said peripheral as being instantaneously serviceable at a predetermined high interrupt priority level;·
b. sequentially activating said operating system routines and user processes while terminating this activation by either
b1. the completion of the current activation up to a predetermined point of the associated operating system routine or user process, whereupon a waiting list is accessed for determining an operating system routine or user process of highest priority in said wating list awaiting activation, or
b2. detecting an occurrence of an interrupt vector signal having a higher priority level than associated to the current activation and upon detecting of such interrupt vector signal detecting whether it has emanated from said peripheral device, and in the positive case activating an associated interrupt service routine (driver) for detecting whether an attention interrupt was generated (86);
upon detecting such attention interrupt then switching the process context (90) to the one pertaining to the peripheral in question, executing the peripheral's interrupt service routine on the prevailing high interrupt priority level (92) and thereafter restoring the operating context (94), but in case said interrupt vector signal had emanated from another source than said peripheral device or represented a non-instantaneously executable interrupt, maintaining the prevailing process context (88).

2. A method for operating a multiprocess computer for sequentially activating respective operating routines and user processes, said user processes including at least one specific user process pertaining to a preferentially treatable peripheral device, said method comprising the steps of:
a. loading the driver program of said preferentially treatable peripheral device, said driver program specifying a predetermined completion interrupt pertaining to said interval as being instantaneously serviceable at a predetermined high interrupt priority level;
b. sequentially activating said operation system routines and user processes while terminating this activation by either
b1. the completion of the current activation up to a predetermined point of the associated operating system routine or process, whereupon a waiting list is accessed for determining an operating system routine or user process of highest priority in said waiting list awaiting activation, or
b2. detecting an occurrence of an interrupt vector signal having a higher priority level than associated to the current activation and upon detecting of such interrupt vector signal detecting whether it has emanated from said peripheral device, and in the positive case activating an associated service routine (driver), for detecting whether a completion interrupt was generated in need of real-time processing (84, 112);
b3. upon detecting such completion interrupt then switching the process context (114) to the one pertaining to the peripheral in question, executing the peripheral's interrupt service routine on the prevailing high interrupt priority level (116) and thereafter restoring the operating context (118), but in case said interrupt vector signal had emanated from another source than said peripheral device or represented a non-instantaneously executable interrupt, maintaining the prevailing process context - (88, 98, 108).

3. A multiprocess computer comprising sequencing means for sequentially activating respective operating system routines and user processes from a main store, said user processes including at least one process pertaining to a preferentially treatable peripheral device, said main store comprising a driver program for said preferentially treatable device specifying a predetermined attention interrupt of said peripheral device as being instantaneously serviceable at a predetermined high interrupt priority level;
said sequencing means having termination means for terminating activation of an activated operating system routine or user process under control of either
-a termination signal generated by the currently activated operating system routine or user process upon obtaining a predetermined point of the latter routine or process, said signal furthermore controlling accessing a waiting list means for determining an operating system routine or user process of highest priority therein awaiting activation, or -an interrupt vector signal having a higher priority level than associated to the current activation, said interrupt vector signal activating a first detecting means for detecting whether it is emanated from said peripheral device, and in the positive case activating an associated interrupt service routine, the latter activating a second detecting means for detecting whether an attention interrupt signal was received;

in the positive case activating a context switching means for switching the process context to one pertaining the peripheral in question and servicing the peripheral's interrupt routine on the prevailing high interrupt priority level, but under control of a negative detection from either said first or second detecting means leaving said context switching means deactivated.

4. A multiprocess computer as claimed in Claim 3, comprising a third detection means for upon a positive case signalled by said first detecting means detecting whether a completion interrupt signal was generated in need of real-time processing, and in the positive case activating a second context switching means for switching the process context to one pertaining to the peripheral in question and servicing the peripheral's interrupt routine on the prevailing high interrupt priority level, but under control of a negative detection result from said third detecting means leaving said second context switching means deactivated.

List of figure texts:

FIG.3:

USER PROCESS CONTEXT-USER STACK

40 USER PROCESS ISSUES SQIO

USER PROCESS CONTEXT-KERNEL STACK

42 QUEUE I.O REQUEST SYSTEM SERVICE PERFORMS DEVICE INDEPENDENT I.O PREPROCESSING.
44 QUEUE I.O SYSTEM SERVICE CALLS DRIVER FDT ROUTINE(S) TO PERFORM DEVICE DEPENDENT PREPROCESSING.
46 LAST FDT ROUTINE CALLS VAX/VMS ROUTINE TO QUEUE I.O REQUEST AND CREATE A DRIVER FORK PROCESS.

FORK PROCESS CONTEXT KERNEL OR INTERRUPT STACK

48 ONCE ACTIVATED THE DRIVER FORK PROCESS EXECUTES THE START I.O ROUTINE.
50 START I/O ROUTINE OBTAINS NECESSARY RESOURCES (FOR EXAMPLE CONTROLLER CHANNEL, UBA MAP REGISTERS) AND ACTIVATES THE DEVICE.
52 START I/O ROUTINE INVOKES A WAIT FOR INTERRUPT MACRO THAT SAVES THE FORK PROCESS CONTEXT AND SUSPENDS THE START I/O ROUTINE.

HARDWARE INTERRUPT OCCURS WHEN REQUESTED BY DEVICE

INTERRUPT CONTEXT INTERRUPT STACK

54 INTERRUPT DISPATCHER ACTIVATES INTERRUPT SERVICE ROUTINE
56 DRIVER'S INTERRUPT SERVICE ROUTINE HANDLES THE INTERRUPT AND TRANSFERS CONTROL TO THE DRIVER AT THE INSTRUCTION FOLLOWING THE WAIT FOR INTERRUPT INVOCATION.
58 THE DRIVER INVOKES IOFORK TO BE RESCHEDULED AT FORK IPL AS A FORK PROCESS.

FORK PROCESS CONTEXT INTERRUPT STACK

60 ONCE RESCHEDULED AS A FORK PROCESS, THE DRIVER EXECUTES THE REST OF THE DRIVER CODE THAT PERFORMS DEVICE DEPENDENT I.O COMPLETION.
62 THE DRIVER THEN CALLS A VAX.VMS ROUTINE TO PERFORM DEVICE INDEPENDENT I/O COMPLETION.

INTERRUPT CONTEXT INTERRUPT STACK

64 VAX/VMS QUEUES A KERNEL MODE AST TO THE PROCESS THAT ORIGINALLY ISSUED THE I/O REQUEST.

USER PROCESS CONTEXT KERNEL STACK

66 ONCE DELIVERED, THE KERNEL MODE AST ROUTINE RUNS IN USER PROCESS CONTEXT TO READ DATA INTO THE USER'S BUFFER FOR A BUFFERED I/O REQUEST.

RETURN FINAL STATUS, AND, IF REQUESTED, QUEUE A USER MODE AST AND/OR SET AN EVENT FLAG.


USER PROCESS CONTEXT USER STACK

   68 USER MODE AST


FIG.4:

INTERRUPT

   80 INTERRUPT DISPATCHER ACTIVATES THE DEVICE UNIT'S INTERRUPT SERVICE ROUTINE
82 INTERRUPT SERVICE ROUTINE LOCATES DEVICE'S UCB USING IDB POINTER ON INTERRUPT STACK
84 IS INTERRUPT SOLICITED?
86 DEVICE ATTENTION INTERRUPT?
88 INTERRUPT SERVICE ROUTINE REJECTS INTERRUPT AS SPURIOUS
90 SWITCH OPERATING CONTEXT
92 EXECUTE PROCESS ATTENTION INTERRUPT PROCEDURE
94 RESTORE OPERATING CONTEXT
96 REACTIVATE SUSPENDED DRIVER
98 DRIVER INVOKES IOFORK MACRO
100 IOFORK CALLS EXE$IOFORK
102 EXE$IOFORK QUEUES DRIVER FORK BLOCK AND RETURNS TO INTERRUPT SERVICE ROUTINE

104 INTERRUPT SERVICE ROUTINE REMOVES IDB POINTER FROM STACK AND RESTORES RO THROUGH R5
106 INTERRUPT SERVICE ROUTINE DISMISSES INTERRUPT WITH REI


FIG.5:

   108 INTERRUPT SERVICE ROUTINE DETERMINES CAUSE OF INTERRUPT
110 TAKES APPROPRIATE ACTION
112 REALTIME I/O?
114 SWITCH OPERATING CONTEXT
116 EXECUTE PROCESS COMPLETION INTERRUPT PROCEDURE
118 RESTORE OPERATING CONTEXT


FIG.6:

   120 UCB EXTENSION DEFINITIONS
122 DEVICE REGISTER DEFINITIONS
124 DRIVE PROLOGUE TABLE
126 DRIVE DISPATCH TABLE
128 FUNCTION DECISION TABLE
130 CONTROLLER INITIALIZATION ROUTINE
132 UNIT INITIALIZATION ROUTINE NOT USED
134 FDT ROUTINES
136 START ROUTINES
138 INTERRUPT SERVICE ROUTINE
140 CANCEL I/O ROUTINE
142 DEVICE REGISTER DUMP ROUTINE

FIG.1

FIG. 2

FIG.3

FIG. 4

FIG.5

| 120 | | 155 — 295 |
| 122 | | 297 — 353 |
| 124 | | 380 — 410 |
| 126 | | 412 — 422 |
| 128 | | 425 — 432 |
| 130 | | 439 — 483 |
| 132 | | |
| 134 | | 488 — 669 |
| 136 | | 675 — 1049 |
| 138 | | 1054 — 1851 |
| 140 | | 1944 — 2093 |
| 142 | | 2097 — 2151 |

## FIG.6

5-Ⅴ-PHQ 85-020